# EUROPÄISCHE PATENTSCHRIFT

(11) **EP 0 991 984 B1**
(45) Veröffentlichungstag und Bekanntmachung des Hinweises auf die Patenterteilung: **27.04.2005**
(21) Anmeldenummer: 98941270.5
(22) Anmeldetag: 03.07.1998
(51) Int. Cl.: G05B 19/05

(54) **PROGRAMMIERGERÄT**
PROGRAMMING APPARATUS
CONSOLE DE PROGRAMMATION

(30) Priorität: 03.07.1997 DE 19728476
(43) Veröffentlichungstag der Anmeldung: 12.04.2000
(73) Patentinhaber: SIEMENS AKTIENGESELLSCHAFT, 80333 München (DE)
(72) Erfinder: BECK, Hans-Joachim, D-76287 Rheinstetten (DE); HORNUNG, Peter, D-91054 Erlangen (DE); MANGLER, Gabriele, D-76327 Pfinztal (DE); WEBER, Ingo, D-76135 Karlsruhe (DE)
(86) Internationale Anmeldenummer: PCT/DE1998/001853
(87) Internationale Veröffentlichungsnummer: WO 1999/001803

(56) Entgegenhaltungen:
- DE-U- 29 710 751
- GB-A- 2 289 554
- US-A- 5 644 487

## Beschreibung

Die Erfindung betrifft ein Programmiergerät gemäß dem Oberbegriff des Anspruchs 1. Darüber hinaus betrifft die Erfindung eine Auswerteeinheit zur Analyse eines Prozeßfehlers in einem Netzwerk.

Ein derartiges Programmiergerät ist aus der Druckschrift "Automatisieren mit SIMATIC S5-115U", Hans Berger, 1995, bekannt. Ein Anwender kann mit einer Programmiersprache zusätzlich zur Formulierung der Automatisierungsaufgabe auch die Art und Weise der Prozeßüberwachung formulieren. Sowohl der derart formulierte Programmteil zur Prozeßüberwachung als auch der derart formulierte Programmteil zum Automatisieren sind Bestandteile eines Anwenderprogramms, welches mit einem geeigneten Compiler übersetzt und schließlich in Form eines in einem Automatisierungsgerät ablauffähigen Steuerprogramms in dieses übertragbar ist. Dadurch, daß die Prozeßüberwachung zusammen mit der Automatisierungsaufgabe formuliert wird, ist das Anwenderprogramm schwer lesbar und unübersichtlich, zumal häufig Verzweigungen der Programmteile auftreten.

Ein weiteres Programmiergerät gemäß dem Oberbegriff des Anspruchs 1 ist in der GB-A-2 289 554 offenbart.

In der deutschen Gebrauchsmusteranmeldung 297 10 751.8 wird vorgeschlagen, eine Projektierung einer Prozeßüberwachung durch Anwahl und Kennzeichnen von Operanden z. B. eines auf einer Anzeigeeinheit darstellbaren Kontaktplanes zu ermöglichen, wobei die ausgewählten und gekennzeichneten Operanden über eine Programmschnittstelle einem Prozeßüberwachungsprogramm übertragbar sind.

Der vorliegenden Erfindung liegt die Aufgabe zugrunde, ein Programmiergerät der eingangs genannten Art zu schaffen, welches einer Auswerteeinheit eine Prozeßfehleranalyse vereinfacht. Darüber hinaus betrifft die Erfindung eine Auswerteeinheit, welche eine Analyse eines Prozeßfehlers ermöglicht.

Diese Aufgabe wird im Hinblick auf das Programmiergerät durch die im kennzeichnenden Teil des Anspruchs 1, im Hinblick auf die Auswerteeinheit durch die im Anspruch 5 angegebenen Maßnahmen gelöst.

Durch die Trennung der Operanden und der Operationen (logische Verknüpfungen), die in einer Operanden- und in einer Logikliste hinterlegbar sind, ist eine Analyse eines Prozeßfehlers zu einem beliebigen Zeitpunkt auf einer Auswerteeinheit, die Bestandteil des Programmiergeräts sein kann, durchführbar. Es ist lediglich erforderlich, den Status der jeweiligen Operanden des Netzwerkes zu erfassen, das mit dem gekennzeichneten Operanden versehen ist. Der jeweilige Status der Operanden wird während Bearbeitungszyklen im Steuerbetrieb des Automatisierungsgerätes erfaßt, wodurch sichergestellt ist, daß eine Prozeßfehleranalyse mit den Operandenwerten durchführbar ist, die zum Zeitpunkt des Auftretens des Prozeßfehlers aktuell waren.

In einer Ausgestaltung der Erfindung gemäß den Merkmalen des Anspruchs 2 kann dadurch, daß die Eintragung des jeweiligen Status der Operanden nur im Fehlerfall oder nach vorgebbaren Zeiten erfolgt, das Automatisierungsgerät im wesentlichen das eigentliche Steuerprogramm bearbeiten.

In einer Ausgestaltung der Erfindung gemäß den Merkmalen des Anspruchs 3 kann die Projektierung der Prozeßüberwachung in einem Kontext mit der Formulierung der Automatisierungsaufgabe durchgeführt werden, wobei ein Anwender sich im wesentlichen auf die eigentliche Problemlösung, nämlich auf die Formulierung dieser Automatisierungsaufgabe konzentriert.

In einer weiteren Ausgestaltung der Erfindung gemäß den Merkmalen des Anspruchs 4 sind die Projektierungsmaßnahmen auf einer Anzeigeeinheit übersichtlich darstellbar, wodurch Projektierungsfehler weitgehend vermieden werden.

Dadurch, daß durch die Kennzeichnung eines Operanden eine diesem Operanden zugeordnete Parametriermaske auf der Anzeigeeinheit darstellbar ist, wobei mindestens ein Überwachungskriterium des Operanden parametrierbar ist, wird die Projektierung vereinfacht und der Projektierungsaufwand verringert.

Anhand der Zeichnung, in der ein Ausführungsbeispiel der Erfindung veranschaulicht ist, werden im folgenden die Erfindung, deren Ausgestaltungen sowie Vorteile näher erläutert.

Es zeigen
- Figur 1: Bestandteile eines Automatisierungssystems,
- Figur 2: eine Kontaktplandarstellung eines Automatisierungsprogramms und eine Operanden-Parametriermaske und
- Figur 3: eine weitere Kontaktplandarstellung sowie eine Operanden- und eine Logikliste.

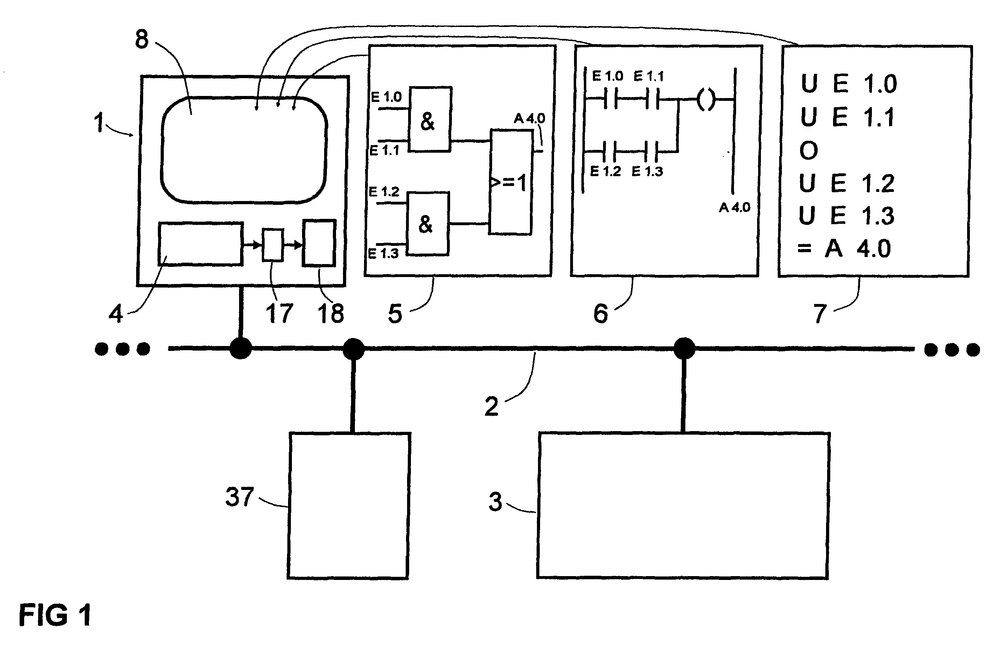

In Figur 1 ist mit 1 ein Programmiergerät bezeichnet, welches über einen Adreß-, Daten- und Steuerleitungen aufweisenden Systembus 2 mit einem Automatisierungsgerät 3 und einer Auswerteeinheit 37 verbunden ist. Weitere Bestandteile des Automatisierungssystems, z. B. Bedien- und Beobachtungsgeräte, Peripheriegeräte oder weitere Automatisierungsgeräte, sind der Einfachheit halber nicht dargestellt und zur Erläuterung der Erfindung nicht erforderlich. Das Programmiergerät ist mit Mitteln 4 in Form eines hier nicht dargestellten Prozessors, eines Speichers und eines Software-Werkzeuges versehen, die zur Formulierung einer zu lösenden Automatisierungsaufgabe in Form einer Programmiersprache vorgesehen sind. Gewöhnlich dient zur Formulierung einer Automatisierungsaufgabe eine Programmiersprache, welche die Darstellung eines Anwenderprogramms in einer sogenannten Funktionsplandarstellung 5 und/oder in einer sogenannten Kontaktplandarstellung 6 und/oder in einer sogenannten Anweisungsliste 7 ermöglicht. Die Funktionsplangrafik 5, der Kontaktplan 6 und die Anweisungsliste 7 sind auf einer Anzeigeeinheit 8 des Programmiergeräts 1 darstellbar, wobei die Mittel 4 des Programmiergerätes 1 die derart formulierte Automatisierungsaufgabe in ein geeignetes Steuerprogramm übersetzen und über den Systembus 2 in einen Speicher des Automatisierungsgerätes 3 on-line übertragen. Die Übertragung kann selbstverständlich auch offline mit einem geeigneten Datenträger erfolgen, auf welchem das Steuerprogramm hinterlegbar ist, der in ein Datenträger-Laufwerk des Automatisierungsgerätes 3 einlegbar ist und von welchem das Automatisierungsgerät 3 das Steuerprogramm einliest. Das auf dem Automatisierungsgerät 3 ablauffähige Steuerprogramm ist zum Steuern eines technischen Prozesses vorgesehen, wobei entsprechende Funktionsbaugruppen im Automatisierungsgerät, geeignete Sensoren und/oder Aktoren sowie Stellglieder nach Maßgabe des Steuerprogramms auf den technischen Prozeß einwirken.

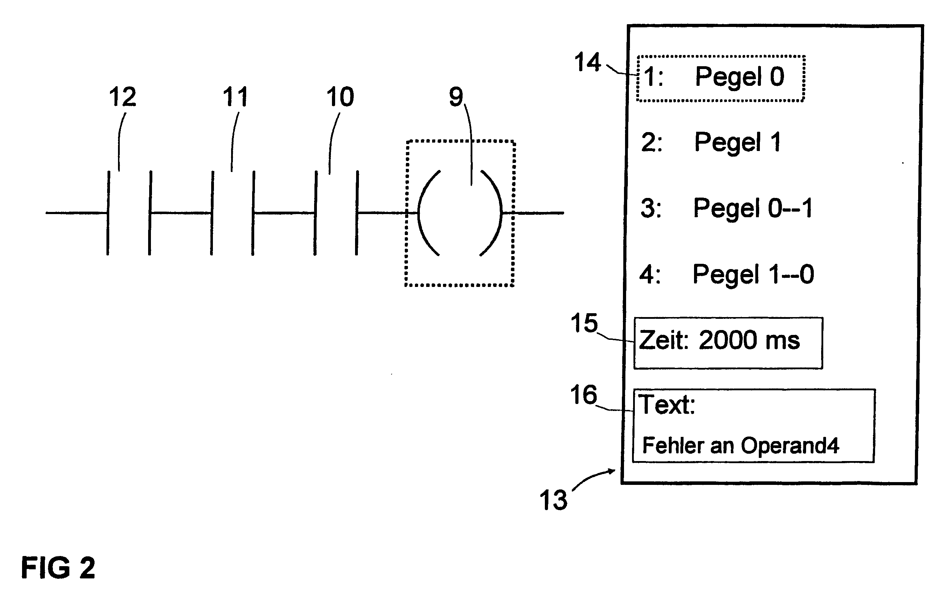

Im folgenden wird auf Figur 2 verwiesen, in welcher eine Kontaktplandarstellung eines einfachen Automatisierungsprogramms und eine Operanden-Parametriermaske dargestellt sind. Es wird angenommen, daß ein Anwender während der Formulierung der Automatisierungsaufgabe, d. h. während der Erstellung des Automatisierungsprogrammes, ein Prozeßelement, im vorliegenden Beispiel einen Operanden 9, bearbeitet. Zu diesem Zeitpunkt kann er eine Projektierung einer Prozeßüberwachung durchführen, indem er mit einem Bedienelement, z. B. einem Bedienelement in Form einer Maus, den Operanden 9 anwählt und diesen kennzeichnet, was im vorliegenden Beispiel durch ein Anzeigeattribut in Form einer gestrichelten Umrahmung des Operanden 9 angezeigt ist. Selbstverständlich ist auch eine farbliche Kennzeichnung möglich. Im vorliegenden Beispiel soll sich die Prozeßüberwachung darauf beschränken, den Operanden 9 zu überwachen. Nachdem der Anwender den Operanden 9 angewählt und gekennzeichnet hat, erscheint auf der Anzeigeeinheit 8 des Programmiergerätes 1 eine dem Operanden 9 zugeordnete Parametriermaske 13, in welcher der Anwender Überwachungskriterien festlegen kann. Im vorliegenden Beispiel ist festgelegt, daß für den Fall, daß der Pegel des Operanden 9 für eine Zeitspanne von 2000 ms den Wert Null aufweist, eine Fehlermeldung auf der Anzeige 8 dargestellt werden soll. Der Anwender hat dazu ein Feld 14 markiert, das wiederum durch eine gestrichelte Umrahmung angezeigt ist, und in einem Feld 15 die Verzögerungszeit 2000 ms eingegeben. Welche Fehlermeldung darzustellen ist, ist durch den Anwender vorgebbar. Der Anwender schreibt dazu einen Text in ein Textfeld 16 ein, der im Fehlerfall auf der Anzeigeeinheit 8 anzuzeigen ist.

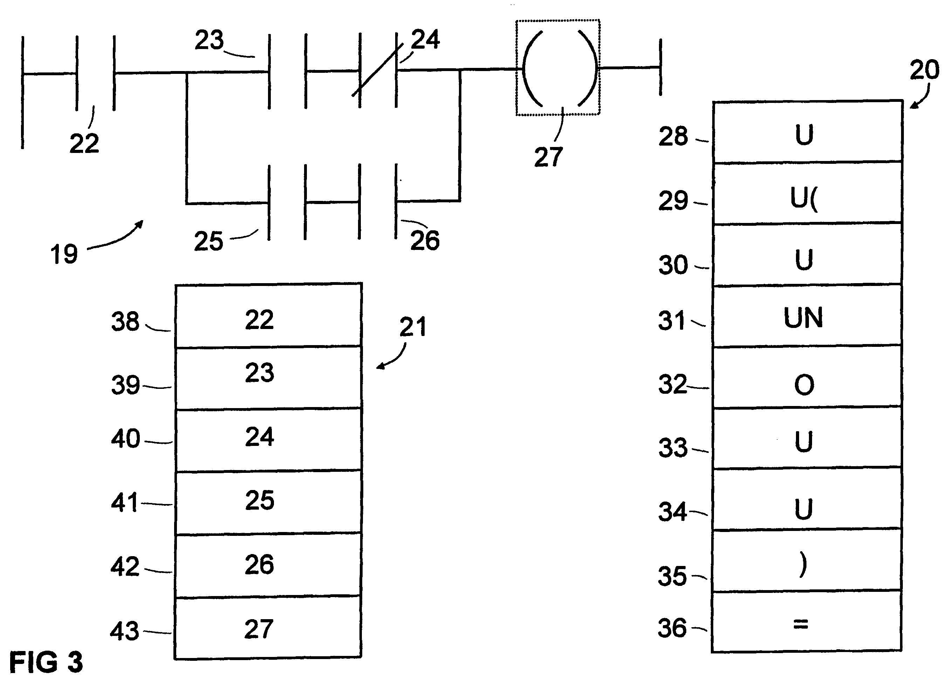

Der ausgewählte und gekennzeichnete Operand 9 wird nach Abschluß der Projektierung zusammen mit den Parametern, welche der Anwender in die Parametriermaske eingegeben hat, durch die Mittel 4 über eine Programmschnittstelle 17 einem Prozeßüberwachungsprogramm 18 im Programmiergerät 1 übertragen (Figur 1). Die Programmschnittstelle 17 und das Prozeßüberwachungsprogramm 18 können Bestandteil der Mittel 4 des Programmiergerätes 1 sein. Wie im folgenden erläutert wird, erstellt das Prozeßüberwachungsprogramm 18 aufgrund des gekennzeichneten Operanden 9 eine Logik- und eine Operandenliste. Hierzu wird auf Figur 3 verwiesen, in welcher ein weiterer Kontaktplan 19 sowie eine Logikliste 20 und eine Operandenliste 21 dargestellt sind.

Es ist angenommen, daß ein Operand 27 zu überwachen ist und ein Anwender diesen Operanden 27 gekennzeichnet hat (im Kontaktplan 19 gestrichelt dargestellt). Anschließend übertragen die Mittel 4 die Operanden und deren Verknüpfungen im Netzwerk 19 dem Prozeßüberwachungsprogramm 18. Das Prozeßüberwachungsprogramm 18 hinterlegt die logischen Verknüpfungen des Netzwerkes 19, welches den gekennzeichneten Operanden 27 aufweist, entsprechend der Reihenfolge ihres Auftretens im Netzwerk 19 in die Logikliste 20 und überträgt diese in eine Auswerteeinheit 37 (Figur 1). Ferner hinterlegt das Prozeßüberwachungsprogramm 18 die Operanden 22, 23, 24, 25, 26 und 27 des Netzwerkes 19, das den gekennzeichneten Operanden 27 umfaßt, entsprechend der Reihenfolge ihres Auftretens im Netzwerk 19 in die Operandenliste 21 und überträgt diese in das Automatisierungsgerät 3 (Figur 1). Im vorliegenden Ausführungsbeispiel ist der Pegel des Operanden 27 dann "1", wenn die Pegel der Operanden 22, 23 und 24 auf "1" oder die Pegel der Operanden 22, 25 und 26 auf "1" sind. Die logischen Verknüpfungen der Operanden sind nach Art einer z. B. aus der Druckschrift "Automatisieren mit SIMATIC S5-115U", Hans Berger, 1995, bekannten Funktionsplandarstellung in der Logikliste 20 hinterlegt, wobei allerdings die Operanden, auf welche die Verknüpfungen anzuwenden sind, in der Operandenliste 21 hinterlegt sind. Im Beispiel ist die UND-Verknüpfung im Feld 28 anzuwenden auf den Operanden 22 (Feld 38), die UND-Verknüpfung im Feld 29 und im zum Feld 29 gehörigen Feld 35 ist anzuwenden entweder auf das Verknüpfungsergebnis der UND- und NICHT_UND-Verknüpfungen der Operanden 23 und 24 im Feld 39 und 40 (siehe UND- und NICHT_UND-Verknüpfungen im Feld 30, 31) oder (siehe ODER-Verknüpfung im Feld 32) auf die UND-Verknüpfungen der Operanden 25 und 26 im Feld 41, 42 (siehe UND-Verknüpfungen im Feld 33, 34). Das Ergebnis der Verknüpfungen, also der Pegel des Operanden 27, ist im Feld 43 hinterlegt.

Während Bearbeitungszyklen im Steuerbetrieb trägt das Automatisierungsgerät 3 im Fehlerfall oder nach durch den Anwender vorgebbaren Zeiten den jeweiligen Status der Operanden 22 ... 27 in die Operandenliste 21 ein. Es ist nun angenommen, daß ein Prozeßfehler während eines Bearbeitungszyklus auftritt und der Pegel des Operanden 27 z. B. einen unzulässigen Pegel Null aufweist. Die Ursache dieses Fehlers kann analysiert werden, indem zunächst die Operandenliste 21 in die Auswerteeinheit 37 (Figur 1) übertragen wird. Die Auswerteeinheit 37 rekonstruiert aus der Logikliste 20 und der Operandenliste 21 das Netzwerk 19 und ermittelt, welcher der Operanden 22 ... 26 für die Ursache des fehlerhaften Null-Pegels des Operanden 27 verantwortlich ist.
Durch die Erfindung werden vorteilhaft nur die Daten erfaßt, die für das zu analysierende Netzwerk notwendig sind. Der jeweilige Status der einzelnen Operanden im Fehlerfalle kann zu einem beliebigen späteren Zeitpunkt vom Auswertegerät gelesen werden, wobei vorzugsweise die Operandenliste vom Auswertegerät dann eingelesen wird, wenn die Busbelastung am geringsten ist.

## Patentansprüche

1. Programmiergerät (1) mit Mitteln (4) zur Formulierung einer zu lösenden Automatisierungsaufgabe in Form einer Programmiersprache für Automatisierungsgeräte, insbesondere einer Programmiersprache, welche eine oder mehrere der folgenden Darstellungsarten in Form einer Funktionsplangrafik (5), einer Anweisungsliste (7) oder eines Kontaktplanes (6) auf einer Anzeigeeinheit (8) ermöglicht, wobei die jeweilige Darstellungsart mit mindestens einem Netzwerk (19) versehen ist, das Operanden und deren logische Verknüpfungen aufweist, und wobei die Mittel aus der formulierten Automatisierungsaufgabe ein auf einem Automatisierungsgerät (3) ablauffähiges Steuerprogramm zum Steuern eines technischen Prozesses erzeugen und die Mittel zur Projektierung einer Prozeßüberwachung vorgesehen sind,
**dadurch gekennzeichnet,**
- **daß** die Mittel (4) die Projektierung der Prozeßüberwachung durch Anwahl und Kennzeichnen der Operanden (9 ... 12; 22 ... 27) in dem Netzwerk ermöglichen,
- **daß** ein Prozeßüberwachungsprogramm (18) die logischen Verknüpfungen des Netzwerkes (19), welches einen gekennzeichneten Operanden (9; 27) aufweist, entsprechend der Reihenfolge ihres Auftretens im Netzwerk (19) in einer Logikliste (20) hinterlegt, welche in eine Auswerteeinheit (37) übertragbar ist,
- **daß** das Prozeßüberwachungsprogramm (18) die Operanden (22 ... 27) des Netzwerkes (19), welches einen gekennzeichneten Operanden (2; 27) aufweist, in einer Operandenliste (21) entsprechend der Reihenfolge ihres Auftretens im Netzwerk (19) hinterlegt, welche in das Automatisierungsgerät (3) übertragbar ist, das während Bearbeitungszyklen im Steuerbetrieb den jeweiligen Status der Operanden (9 ... 12; 22 ... 27) in die Operandenliste (21) einträgt, wobei diese mit dem jeweiligen Status der Operanden (9 ... 12; 22 ... 27) versehene Operandenliste (21) zur Analyse eines Prozeßfehlers in die Auswerteeinheit (37) übertragbar ist.

2. Programmiergerät nach Anspruch 1, **dadurch gekennzeichnet, daß** Mittel vorgesehen sind, durch die das Automatisierungsgerät (3) die Eintragung des jeweiligen Status der Operanden (9 ... 12; 22 ... 27) während Bearbeitungszyklen im Steuerbetrieb im Fehlerfall oder nach vorgebbaren Zeiten erfolgt.

3. Programmiergerät nach Anspruch 1 oder 2, **dadurch gekennzeichnet, daß** Mittel vorgesehen sind, durch die während der Formulierung der Automatisierungsaufgabe die Operanden (9 ... 12; 22 ... 27) durch die Mittel (4) anwähl- und kennzeichenbar sind.

4. Programmiergerät nach einem der Ansprüche 1 bis 3, **dadurch gekennzeichnet, daß** durch die Mittel (4) die Kennzeichnung auf der Anzeigeeinheit (8) durch ein Anzeigeattribut, insbesondere durch eine vorgebbare Farbe, darstellbar ist.

5. Programmiergerät nach einem der Ansprüche 1 bis 4, **dadurch gekennzeichnet, daß** Mittel vorgesehen sind, durch die nach der Kennzeichnung eines Operanden (9) durch die Mittel (4) eine diesem Operanden (9 ... 12) zugeordnete Parametriermaske (13) auf der Anzeigeeinheit (8) darstellbar ist, wobei mindestens ein Überwachungskriterium des Operanden (9 ... 12) parametrierbar ist.

6. Auswerteeinheit (37) zur Analyse eines Prozeßfehlers, welcher eine Logikliste durch ein Programmiergerät nach einem der Ansprüche 1 bis 5 und eine Operandenliste durch ein Automatisierungsgerät übertragbar sind, wobei
- in der Logikliste (20) logische Verknüpfungen entsprechend der Reihenfolge ihres Auftretens in einem Netzwerk (19) hinterlegt sind, das einen durch das Programmiergerät zu einer Prozeßüberwachung gekennzeichneten Operanden (27) umfaßt,
- in der Operandenliste (21) Operanden (22 ... 27) des Netzwerkes (19), welches den gekennzeichneten Operanden aufweist, entsprechend der Reihenfolge ihres Auftretens in dem Netzwerk (19) hinterlegt sind, wobei in die Operandenliste (21) das Automatisierungsgerät (3) während Bearbeitungszyklen in einem Steuerbetrieb den jeweiligen Status der Operanden (22 ... 27) einträgt,
- die Logikliste (20) und die Operandenliste (21) durch die Auswerteeinheit (37) zur Analyse eines Prozeßfehlers auslesbar sind, wobei die Auswerteeinheit (37) das Netzwerk (19) aus den logischen Verknüpfungen und dem jeweiligen Status der Operanden rekonstruiert.

## Claims

1. Programming device (1) having means (4) for formulating an automation task (which is to be achieved) in the form of a programming language for automation devices, in particular a programming language that facilitates one or more of the following types of representation: in the form of a function plan diagram (5), an instruction list (7) or a contact plan (6) on a display unit (8), the respective type of representation being provided with at least one network (19) that has operands and their logic operations, and the means using the automation task that has been formulated to produce a control program that can be executed on an automation device (3) and is intended to control a technical process, and the means being intended to plan process monitoring,
**characterized**
- **in that** the means (4) make it possible to plan process monitoring by selecting and identifying the operands (9 ... 12; 22 ... 27) in the network,
- **in that** a process monitoring program (18) stores the logic operations of the network (19) - which has an identified operand (9; 27) - in a logic list (20) in accordance with the order in which they occur in the network (19), it being possible for said logic list to be transmitted to an evaluation unit (37),
- **in that** the process monitoring program (18) stores the operands (22 ... 27) of the network (19) - which has an identified operand (2; 27) - in an operand list (21) in accordance with the order in which they occur in the network (19), it being possible for said operand list to be transmitted to the automation device (3) that enters the respective status of the operands (9 ... 12; 22 ... 27) in the operand list (21) during processing cycles during control operation, it being possible for this operand list (21) that has been provided with the respective status of the operands (9 ... 12; 22 ... 27) to be transmitted to the evaluation unit (37) in order to analyse a process error.

2. Programming device according to Claim 1, **characterized in that** provision is made of means which are used by the automation device (3) to enter the respective status of the operands (9 ... 12; 22 ... 27) during processing cycles during control operation in the event of an error or after prescribable periods of time.

3. Programming device according to Claim 1 or 2, **characterized in that** provision is made of means which can be used by the means (4) to select and identify the operands (9 ... 12; 22 ... 27) during formulation of the automation task.

4. Programming device according to one of Claims 1 to 3, **characterized in that** the means (4) can be used to display the identification on the display unit (8) using a display attribute, in particular a prescribable colour.

5. Programming device according to one of Claims 1 to 4, **characterized in that** provision is made of means which, after an operand (9) has been identified by the means (4), can be used to display a parameterization mask (13) - which is associated with this operand (9 ... 12) - on the display unit (8), it being possible to parameterize at least one monitoring criterion of the operand (9 ... 12).

6. Evaluation unit (37) for analysing a process error, to which a programming device according to one of Claims 1 to 5 can transmit a logic list and an automation device can transmit an operand list,
- logic operations being stored in the logic list (20) in accordance with the order in which they occur in a network (19) that comprises an operand (27) that has been identified by the programming device for process monitoring,
- operands (22 ... 27) of the network (19) that has the identified operand being stored in the operand list (21) in accordance with the order in which they occur in the network (19), the automation device (3) entering the respective status of the operands (22 ... 27) in the operand list (21) during processing cycles during control operation,
- the evaluation unit (37) being able to read out the logic list (20) and the operand list (21) in order to analyse a process error and reconstructing the network (19) from the logic operations and the respective status of the operands.

## Revendications

1. Machine de programmation (1 ) comportant des moyens (4) pour qu'une tâche d'automatisation à déclencher soit formulée sous forme d'un langage de programmation pour des machines d'automatisation, en particulier un langage de programmation qui permet, sous forme d'un graphique de schéma logique (5), d'une liste d'instructions (7) ou d'un plan des contacts (6), un ou plusieurs types suivants de représentation sur une unité d'affichage (8),
chaque type de représentation est alors pourvu d'au moins un réseau (19) qui comporte des opérandes et leurs fonctions logiques et, à partir de la tâche d'automatisation formulée, les moyens produisent un programme de gestion exécutable sur une machine d'automatisation (3) et destiné à commander une opération technique et les moyens sont prévus pour projeter une surveillance des opérations,
**caractérisée en ce que**
- les moyens (4) permettent de projeter la surveillance des opérations en sélectionnant et en caractérisant les opérandes (9 à 12 ; 22 à 27) dans le réseau,
- un programme de surveillance des opérations (18) enregistre, dans une liste logique (20) qui peut être transférée dans une unité d'exploitation (37), en fonction de l'ordre où elles sont apparues dans le réseau (19) les fonctions logiques du réseau (19) qui comporte un opérande (9 ; 27) caractérisé,
- le programme de surveillance des opérations (18) enregistre, dans une liste d'opérandes (21) transférable dans la machine d'automatisation (3) qui inscrit dans la liste d'opérandes (21) l'état correspondant des opérandes (9 à 12 ; 22 à 27) pendant des cycles de traitement en fonctionnement de commande, en fonction de l'ordre où ils sont apparus dans le réseau (19) les opérandes (22 à 27) du réseau (19) qui comporte un opérande (9 ; 27) caractérisé, cette liste d'opérandes (21) pourvue de l'état correspondant des opérandes (9 à 12 ; 22 à 27) pouvant être transférée dans l'unité d'exploitation (37) pour analyser une erreur opératoire.

2. Machine de programmation selon la revendication 1, **caractérisée en ce que**, en cas d'erreur ou après des périodes prédéfinissables, on prévoit des moyens grâce auxquels la machine d'automatisation (3) inscrit l'état correspondant des opérandes (9 à 12 ; 22 à 27) pendant des cycles de traitement en fonctionnement de commande.

3. Machine de programmation selon la revendication 1 ou 2, **caractérisée en ce qu'**on prévoit des moyens grâce auxquels les opérandes (9 à 12 ; 22 à 27) peuvent être sélectionnés et caractérisés pendant que la tâche d'automatisation est formulée.

4. Machine de programmation selon l'une des revendications 1 à 3, **caractérisée en ce que**, à l'aide des moyens (4), la caractérisation peut être représentée sur l'unité d'affichage (8) par un attribut d'affichage, en particulier par une couleur prédéfinissable.

5. Machine de programmation selon l'une des revendications 1 à 4, **caractérisée en ce qu'**on prévoit des moyens grâce auxquels, après qu'un opérande (9) a été **caractérisé par** les moyens (4), un masque de paramétrage (13) associé à cet opérande (9 à 12) peut être représenté sur l'unité d'affichage (8), au moins un critère de surveillance de l'opérande (9 à 12) pouvant alors être paramétré.

6. Unité d'exploitation (37) pour analyser une erreur opératoire, sur laquelle une liste logique peut être transférée par une machine de programmation selon l'une des revendications 1 à 5 et une liste d'opérandes par une machines d'automatisation,
dans laquelle
- des fonctions logiques sont enregistrées dans la liste logique (20) en fonction de l'ordre où elles sont apparues dans le réseau (19) qui comprend un opérande (27) **caractérisé par** la machine de programmation pour surveiller une opération,
- en fonction de l'ordre où ils sont apparus dans le réseau (19), des opérandes (22 à 27) du réseau (19) qui présente l'opérande caractérisé sont enregistrés dans la liste d'opérandes (21), la machine d'automatisation (3) inscrivant l'état correspondant des opérandes (22 à 27) dans la liste d'opérandes (21) pendant des cycles de traitement dans un fonctionnement de commande,
- la liste logique (20) et la liste d'opérandes (21) peuvent être lues par l'unité d'exploitation (37) pour analyser une erreur opératoire, l'unité d'exploitation (37) reconstituant alors le réseau (19) à partir des fonctions logiques et de l'état correspondant des opérandes.
